# EUROPEAN PATENT APPLICATION

(11) **EP 1 185 066 A2**
(43) Date of publication of application: **06.03.2002**
(21) Application number: 01120902.0
(22) Date of filing: 30.08.2001
(51) Int. Cl.: H04M 3/53

(54) **Method for transferring a message received and stored in the absence of the user**

(30) Priority: 30.08.2000 JP 2000260729
(71) Applicant: NEC CORPORATION, Tokyo (JP)
(72) Inventor: Homma, Hiroki, Tokyo (JP)
(74) Representative: von Samson-Himmelstjerna, Friedrich R., Dipl.-Phys.

(57) **Abstract**

In a method for an automatic message transfer service, at least one message is stored in a message service center MSC (30) through a telephone company (20) and is sent to a Web terminal (50) of a user (10) from the MSC. The automatic message transfer service is registered by each user as a result of a contract with the telephone company (20). The Web terminal (50) is connected to the MSC through INTERNET (40). The Web terminal makes access to the MSC through the INTERNET and obtains an authentication of the automatic message transfer service. The MSC sends only storage data related to the stored messages destined to the registered user. The Web terminal displays the received storage data of the messages on a screen by letters, selects the storage data for one of the messages, and notifies the MSC of the selected storage data. The MSC receives the selected storage data and sends the message itself corresponding to the received storage data to the Web terminal.

## Description

### Background of the Invention:

The present invention relates to a transfer method for transferring a message, which is stored or recorded in a message service center through a telephone enterprise or company in the absence of a user and which is read out by a request of the user. The user is previously registered about receiving such a message transfer service. Herein, it is to be noted that the message transfer method according to the present invention is effective to easily administrate acquisition and preservation of the message.

Conventionally, a transfer method or system for a recorded message in the absence of a user has been realized as follows. In the transfer system, a message service center is provided which is called when a user can not respond to a call due to the absence or due to attendance at a formal meeting or a concert. The message service center receives and stores some messages from a calling party and then transfers the stored messages to a user in response to a request from the user.

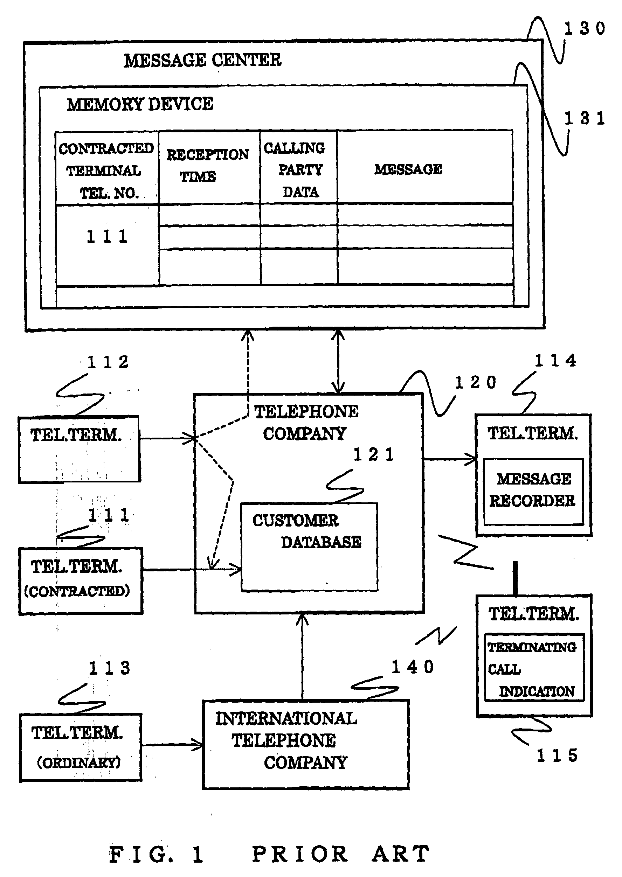

Fig. 1 shows an example of a block diagram of an existing transfer system which records a message in the absence of a user.

Referring to Fig. 1, the existing transfer system generally comprises telephone terminals or sets 111 -115, a local telephone company 120, a message center 130, and an international telephone company 140.

The telephone terminal 111 has contracted to receive such a message transfer service in advance and, as a result, is given the message transfer service. The telephone terminals 112 and 113 may be ordinary telephone sets. The telephone terminal 114 has a message recorder operable in the absence of a user to record each message. And the telephone terminal 115 is movable and may be a portable telephone or cellular phone that has a display for message.

The telephone company 120 has a customer database and is connected to the message center 130, the international telephone company 140 and the telephone terminals 111 -115, while the international telephone company 140 is connected to the telephone terminal 113 alone in the illustrated example.

The message center 130 belongs to the telephone company 120 and has a memory device 131 in which a memory area for message recording is assigned to the telephone terminal 111 registered already.

Under these circumstances, description will be made in regard to telephone call from the telephone terminal 112 to the telephone terminal 111 from which the user is absent. At first, the telephone company 120 detects a telephone number of the telephone terminal 112 as calling party data. Then, the telephone company 120 records this calling party data and reception time together with a date into the memory area allocated to the telephone terminal 111 in the memory device 131. Subsequently, the telephone company 120 connects the telephone terminal 112 to the message center 130, which informs or announces the telephone terminal 112 of an absent message service or an automatic message transfer service by voice. According to the announcement or guidance, the message center 130 receives a voice message from the telephone terminal 112. The voice message is recorded and stored on the memory area of the memory device 131.

In the case where the user of the telephone terminal 111 reproduces the message from the memory device 131 in the absence, the user can read the message out of the memory device 131 by giving a predetermined simple number to the telephone terminal 111. However, in case of reproducing the message at a remote location from the telephone terminal 111, a predetermined operation should be executed by the user after a call is issued to the telephone company 120 contracted with the user. Moreover, this procedure is not always simple because the message center 130 should execute complicated processing, such as entity authentication carried out by using an enciphered code, accounting a toll. Especially, the toll accounting raises a serious problem when the user receives the message transfer service at a location, such as a foreign country, remote from the telephone terminal 111 because the toll becomes very high.

In addition, the illustrated telephone terminal 114 has the message recorder, as mentioned before. When a message is recorded in the message recorder of the telephone terminal 114, it can be reproduced by a comparatively simple procedure as long as the user stays in a country. However, a toll may become high when the user accesses and reproduces the recorded message from a foreign country, as described above. And even if the illustrated cellular phone, namely, the portable type terminal 115 notifies about reception of the message in the absence of the user, similar problem takes place in connection with a call from a foreign country.

Moreover, received messages are recorded in the form of voice messages in order of reception calls. Accordingly, a telephone toll charge may be reasonable when a message is reproduced by the telephone terminal 113 or 115 within a domestic area of the message center 130 or within a service area of a single telephone company to which the message center 130 belongs. However, an additional toll is excessively charged when a message is transferred through a plurality of telephone companies.

An existing absence telephone service for reduction of the additional charge in the portable or cellular phone is disclosed, for example, in Japanese Unexamined Patent Publication (JP-A) No. 2000-125004. This system is for recording a voice signal sent from a calling mobile telephone to transmit the same to a called telephone terminal through INTERNET.

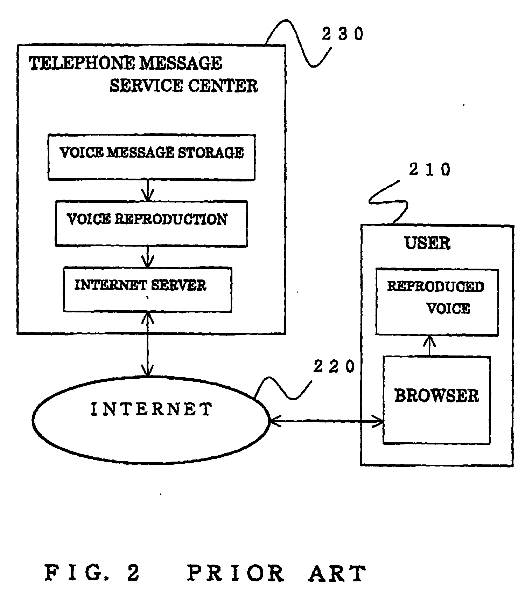

Referring to FIG. 2, a following description will be made regarding this technology. In the case where a telephone message service center 230 stores some voice messages, a contractor or a user 210 makes access to a server on INTERNET 220 of which the user is noticed in advance with the aid of a browser. The user 210 is authenticated by Inputting a telephone number (directory number) and an enciphered code or number given to the mobile telephone. After authentication of the user, the server on INTERNET 220 reproduces the stored or recorded message into voice in cooperation with the telephone message service center 230 and transmits it by voice to a terminal of the contractor 210 through a router and INTERNET 220.

The above-described automatic message transfer system has the following problems.

The first problem is that the stored message is limited in its volume and can not be maintained for a long term. This is because the telephone service center is restricted in a memory capacity for memorizing a voice signal given in accordance with a voice data format. Further, the cellular phone has a very limited recording capacity for recording a voice signal. Especially, no description is made in the above-referenced Japanese Unexamined Patent Publication about storing or memorizing the message as a voice signal, although description is made about receiving the voice signal. Although it is possible with this method to reproduce and to listen to the stored message in accordance with a determined procedure as long as the user erases the message, the problems still remain that the calling process is troublesome and the message can not be stored for long time.

The second problem resides in a difficulty of selecting a reproducing order of many stored messages or selecting a priority for an emergency one. Because, when many messages are stored, many handling operations are required for selecting one of them so as to visually display them on a very small display of the cellular phone. In the above-mentioned reference, voice messages should be successively reproduced only in order and, as a result, no preferential selection of the messages can be realized in the cellular phone disclosed in the reference.

The third problem is that any message except voice can not be easily handled. This is because the automatic or absence transfer service center itself can receive only the voice message while the cellular phone has a very small display.

### Summary of the Invention:

It is therefore an object of the present invention to provide an automatic message transfer method, which is capable of facilitating to store or record various types of messages.

It is another object of the present invention to provide a method of the type described, wherein many message items can be selected in consideration of priority or importance of each message item.

It is still another object of the present invention to provide a method of the type described , wherein messages can be readily administrated and stored.

According to the present invention, there is provided a method of transferring a message in the absence of user, in which a MSC (message service center) and a Web terminal for INTERNET are comprised. The MSC stores messages received through a telephone company and then transfers them to a user registered in advance. The Web terminal is connected to the MSC through INTERNET.

This Web terminal has a browser, calls the predetermined MSC through INTERNET by accessing to the MSC (by the use of URL) or a mail server of INTERNET, and is authenticated by a user ID and an approval code such as a password. The MSC sends storage data of messages regarding the contracted user to the approved Web terminal. The Web terminal displays storage data of receiving messages by letters and notifies storage data of a message selected from the receiving messages to the MSC. The MSC receives the selected storage data by a linked URL for example and sends the message corresponding to the received data.

In such composition, the Web terminal displays the storage data of the message received from the MSC by letters or characters and the message storage data are formed by a list of only the related data of such a minimum amount, such as a calling party number and a reception time regarding each stored message. This means that data related to the stored messages are capable of being displayed by letters in the display screen of the Web terminal. As the result, the user watching display of letters can be selected in consideration of priority of the data.

Concretely the transfer method for the absence message, namely, an automatic message transfer method according the present invention has following steps.

One step is that the Web terminal, accessed by a URL notified in advance through INTERNET, obtains a Web page of the MSC and approves its use when a correct authentication code, for example a user ID and a password, are given to the Web page. Another one step is that the MSC sends the storage data, for example a calling party number and a reception time, of message stored regarding the registered user to the Web terminal approved by the MSC. Another one step is that the Web terminal displays the storage data received from the MSC on the screen by letters, selects one of them displayed, and sends back the data selected to the MSC. The other one, the MSC sends a full message corresponding to the storage data received to the Web terminal.

It is preferable that the storage data of the message have URLs linked to each stored message. Accordingly, the Web terminal connecting to INTERNET can easily take out the selected storage message, accessing to this linked URL by the step of sending of the selected message described above by using of existing systems.

Further, the transfer method for the absence message according the present invention can provide a voice/letter converter converting a voice message to a letter message to the MSC. The MSC can convert the stored voice message to the letter message and then sends out the converted message to the Web terminal through INTERNET. Accordingly, as the Web terminal can receive and display the lettered message like an Electronic mail (E-mail), the user immediately understands the contents of the message received.

Another transfer method for the absence message according the present invention can use the E-mail. That is, the registered user registers more E-mail address in the customer data in advance. The MSC inquiries the customer data of the message at a time of this reception and storage. In case that the E-mail address is included in the customer data, the MSC can send the storage data including a calling party number and a reception data of the message and additionally the E-mail address of the user through INTERNET.

As a result, the registered user can take out the message in the absence of the user in the Web terminal based on the predetermined situation.

Furthermore, the message is capable of including voice, letters and image, and being classified into transfer service classes according to voice data or letter data, voice and image data, or letter and image data. Subsequently, the user further registers the transfer service class of the message at a time of registration of the message transfer service. At the same time of sending the storage data of the message regarding the registered user, the MSC sends the data based on the transfer service class In addition to the storage data to the user. As a result, the user can registers more various transfer services for this system. Like in the described above, the user can use the storage data of the message, by giving a URL linked to each of the data.

As a result, it is possible to achieve the object, i.e., which is capable of facilitating of storage of various messages including voice and priority selection from many message items, and administrating easily regarding taking out and storage of messages.

### Brief Description of the Drawings:

Fig. 1 is a block diagram of an existing transfer system of message in the absence of the user;
Fig. 2 is a block diagram of an existing transfer system of message in the absence of the user for use of INTERNET;
Fig. 3 is a block diagram of a transfer system of message in the absence of the user according to an embodiment of the present invention;
Fig. 4 is an explanation diagram of memory items of a customer database according to an embodiment of the present invention;
Fig. 5 is an explanation diagram of memory items of a memory device according to an embodiment of the present invention;
Fig. 6 is a flowchart of a registration procedure of a telephone company according to an embodiment shown in Fig. 3;
Fig. 7 is a sequence chart of a storage procedure of a message according to an embodiment shown in Fig. 3;
Fig. 8 is an explanation diagram of one portion of a display screen of a Web terminal according to an embodiment shown in Fig. 3;
Fig. 9 is a sequence chart of taking out procedure of a message according to an embodiment shown in Fig. 3;
Fig. 10 is a block diagram for flow of charge according to an embodiment shown in Fig. 3;
Rg. 11 is a block diagram of an MSC adding a converter of voice and letters according to an embodiment shown in Fig. 3;
Fig. 12 is an explanation diagram of memory items of a customer database adding E-mail item to an embodiment shown in Fig. 4;
Fig. 13 is another explanation diagram of memory items of a memory device storing messages by a text format different from an embodiment shown in Fig. 5.
Fig. 14 is a sequence chart of a message transfer procedure for use of E-mail according to an embodiment of the present invention;
Fig. 15 is an explanation diagram of memory items of a customer database according to an embodiment of the present invention;
Fig. 16 is an explanation diagram of classification of MSC service code in a customer database according to an embodiment shown in Fig. 3.

### Description of the preferred Embodiments:

Now, several preferred embodiments of the present invention will be described with reference to the drawings. On the drawings, unrelated portions according to this invention is omitted.

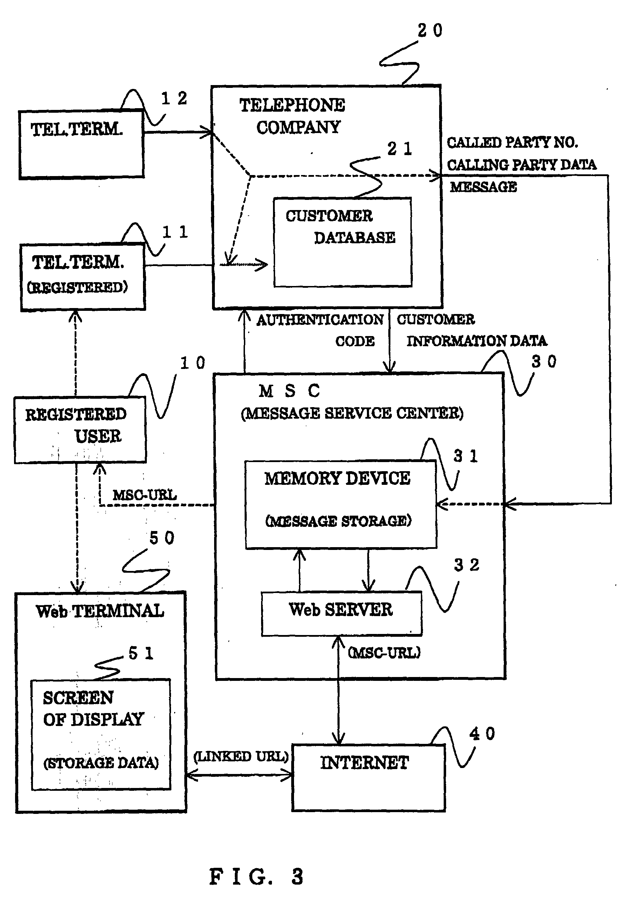

Referring to Fig. 3, a system according to one embodiment of the present invention realizes a transfer method of a message in the absence of user, namely, during user absence. And the system comprises a registered user 10, telephone terminals 11 and 12, a telephone company 20, an MSC (message service center) 30, INTERNET 40, and Web terminal 50.

The registered user 10 contracts for a telephone service of the telephone terminal 11 with the telephone company 20 and further registers an automatic transfer service of a message (reception message) received in the absence. The illustrated automatic message transfer service is for storing the reception message in the MSC 30, and then transfers the stored message to the contracted telephone terminal 11. The registered user 10 can reproduce or take out the stored message from the MSC 30 through the INTERNET 40 by the use of the Web terminal 50. Herein, it is assumed that the registered user 10 is previously notified of a user ID and a password as an authentication code and a URL for the sake of calling the MSC 30.

The telephone terminal 12 is shown as a calling party and calls the contracted telephone terminal 11.

The telephone company 20 is connected to the telephone terminals 11 and 12 and the MSC 30, and has a customer database 21 recording, as customer information data, data concerned with subscribers contracted about the telephone service. In addition to telephone services, the illustrated telephone company 20 provides the automatic message transfer service to the telephone terminal 11 already registered in connection with the automatic message transfer service. In the automatic message transfer service, the telephone company 20 transfers, to the MSC 30, a calling party directory number sent from the telephone terminal 12 by the use of a calling line identification presentation service, together with the called party number (the directory number of the telephone terminal 11) and messages received in the absence of the user. Receiving the authentication code of the user 10 from the MSC 30, the telephone company 20 also sends the customer Information data of the user 10.

The MSC 30 comprises a memory device 31 and a Web server 32. The memory device 31 stores, through the telephone company 20, the messages received in the absence of the user of the telephone terminal 11. The Web server 32 is connected to the INTERNET 40 and sends the stored message to the INTERNET 40 at a time of receiving a message transfer request due to an access operation using the URL. The MSC 30 in the illustrated example has the URL which is assigned thereto and which is used when the Web terminal 50 is accessed through the INTERNET 40, together with a home page as a Web page. And the MSC 30 requests to send the authentication code to the user in response to the message transfer request. And then the MSC 30 sends out the storage information data of the message regarding the registered user 10 when coincidence is detected between the authentication cord received from the user and the registered one stored in the customer database 21 of the telephone company 20.

The INTERNET 40 is well-known and widely used. In a well known manner, the Web terminal 50 makes access to the MSC 30 by the use of a built-in browser and the URL assigned to the MSC through the INTERNET 40, receives the storage information data related to the message received in the absence by the registered telephone terminal 11. The Web terminal 50 has a screen 51 for displaying the received storage information data by letters or codes.

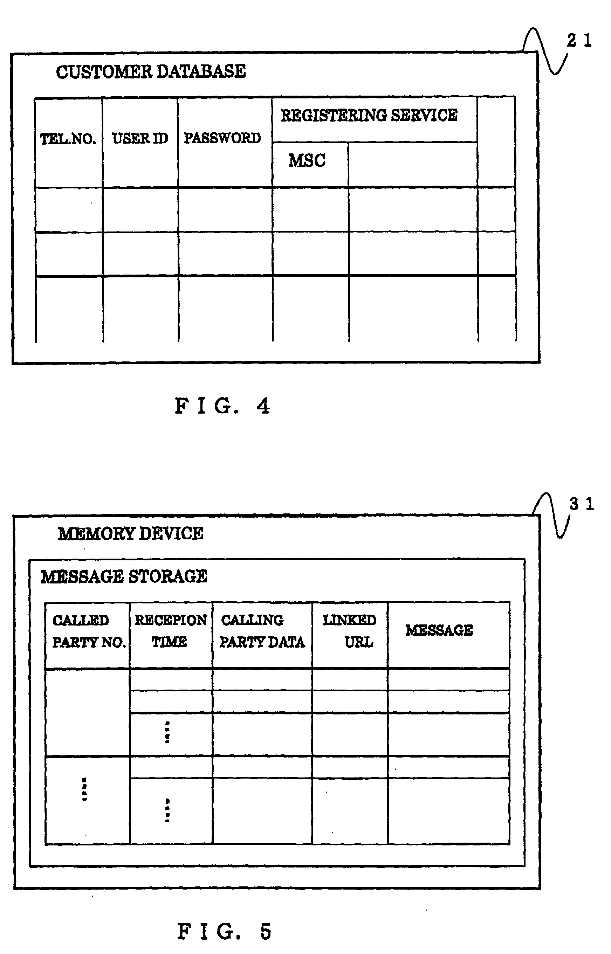

Referring to Fig. 4, description will be made of the customer database 21 of Fig. 3 according to the embodiment of the present invention. The customer database 21 records and stores at least a telephone number, a user identification (ID) code, and further customer information data, such as names and addresses used for collecting the toll or charge and account codes for drawing from an account, when the automatic message transfer service is registered. The telephone number is given to the contracted telephone terminal 11. The user authentication code is constructed by the user ID and the password or the code or ciphered number of the registered user.

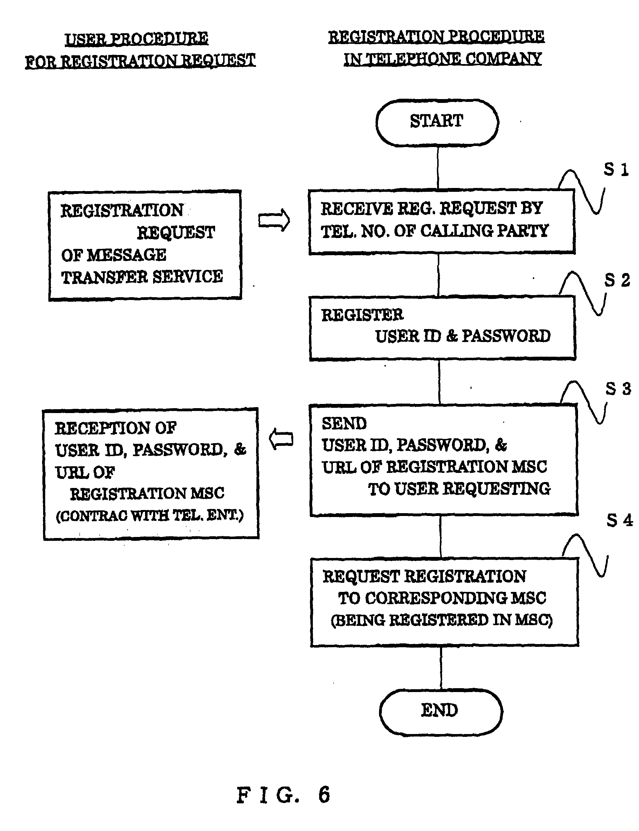

Referring to Fig. 5, description will be made of the memory device 31 of the MSC 30 according to the embodiment of the present invention. The memory device 31 has a memory area for the called party number received together with the message from the telephone company 20 and for corresponding to the registered user. The memory area records a reception time and a calling party data in accordance with a code data format, and a linked URL given to the Web page of the message storage for the sake of storage of the message received from the telephone company 20. The recorded message is composed of voice data for an ordinary telephone terminal or of data including voice and image for a television telephone terminal.

Referring to Fig. 6 and Figs. 3 and 4 described above, description will be made of a registration procedure of the automatic message transfer service according to an embodiment of the present invention.

The user 10 who will intend to request a registration of the automatic message transfer service requests the registration to the telephone company 20 by the contracted telephone terminal 11. The telephone company 20 receives the registration request from a telephone number of the calling telephone terminal 11 (Step 1). Then, the telephone company 20 checks a registration service area of the customer database 21 and registers a user ID for identifying the registered user and a password for approval, for example a code number, as an authentication code (Step 2). The user ID or the password may be commonly used together with one accepted in other registration services.

Then, the telephone company 20 sends, to the user or called party, the user ID, and the password registered and additionally a URL given to the MSC for example (Step 3). Then the telephone company 20 requests the registration to the MSC 30 (Step 4), and also sends the telephone number of the registered telephone terminal 11 to the MSC 30. In addition, a message is also registered in the MSC together with a called party number in the absence of the user. Accordingly, the related MSC 30 secures memory area for the sake of the reception time and stores the storage information data corresponding to the called number received in the memory device 31 along with the linked URL for the message storage data, and the Web page of the linked URLs.

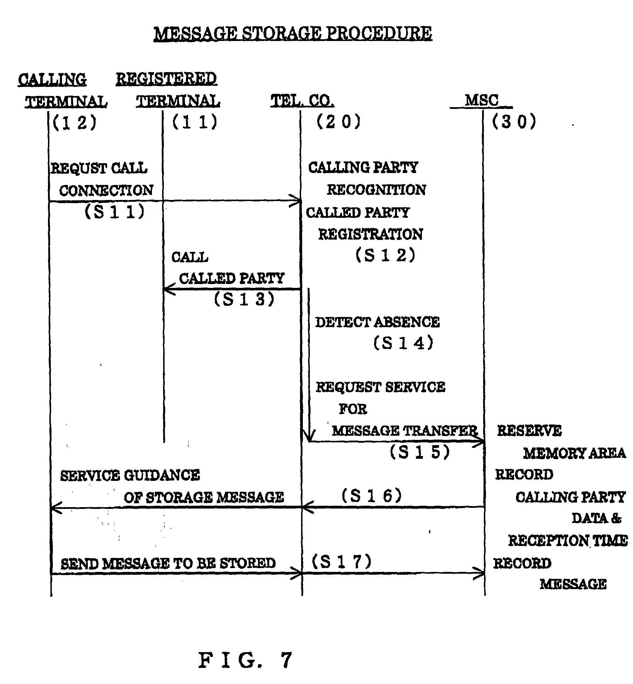

Referring to Fig. 7 and Figs. 3 to 5, description will be made of a storage procedure of the automatic message transfer according to the embodiment of the present invention. Herein, a message to be transferred in the absence of the user may be called an absence message.

At first, a calling subscriber of the telephone terminal 12 issues a call connection request for the telephone terminal 11 by making use of the telephone terminal 12 (Step 11). Responsive to this request, the telephone company 20 recognizes the calling subscriber from the telephone number of the calling telephone terminal 12. On the other hand, the telephone company 20 checks a registration service mark in the customer database 21 with reference to a telephone number of the called telephone terminal 11 indicated as a called party number and confirms the registration of the called party (Step 12). Then the telephone company 20 calls the called telephone terminal 11 (Step 13).

Next, the telephone company 20 detects a called party absence by no response (Step 14). Such absence of the called party is detected by measuring a time by a timer or by repeated times of ringing signals. And then the telephone company 20 issues a request of storing a message to the MSC 30 (Step 15), by referring to the telephone number of the called telephone terminal 11.

The MSC 30 ensures a Web page and reserves a memory area for recording the message sent from the called party number of the telephone terminal 11. Thereafter, the MSC 30 executes a service guidance of the absence of the calling party by voice to the calling telephone terminal 12 through the telephone company 20 (Step 16). The MSC 30 records the calling party data received at the message storage request and the linked URL included in the Web page for recording. By the service guidance, a voice message from the telephone terminal 12 is received as an absence message to the MSC 30 through the telephone company 20 (Step 17). In this event, the MSC 30 records a date and a reception time by letters and the voice message in the Web page in the form of the voice data format.

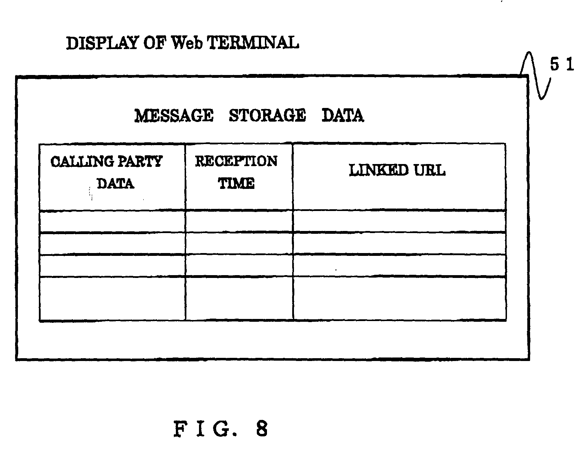

Referring to Fig. 8 and Figs.3 and 5, description will be made of a message storage data displayed on a screen 51 of the Web terminal 50 according to the embodiment of the present invention.

Fig. 8 illustrates an example of message storage data displayed on the screen 51 of the Web page of the Web terminal 50 when the registration is authenticated by making access to the MSC 30 by the use of the URL. The screen 51 displays the calling party data, the reception time, and the linked URL by letters, as illustrated in Fig. 8, which may be, for example, selected from the stored messages in the memory device 31.

A linked URL is linked to a Web page storing a message, as described above. Generally, the linked URL may not be displayed on the screen and accessed to the Web page by click action of selecting one of calling party data for example. However, in Fig. 8, the linked URL is displayed on the screen for the convenience of this explanation.

As described above, information of a lot of stored messages is possible to display by a few itemized data thereof. And as an emergency item or a priority selection can distinguish by the calling party data and the reception time in the message storage data, the user can take out one by one message from many stored messages with Independent priority for the reception order by the linked URL.

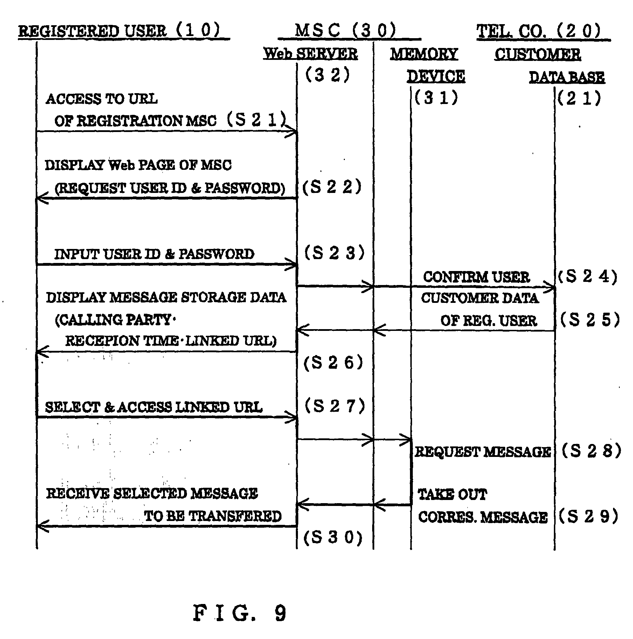

Referring to Fig. 9 and Figs.3 to 5 and 8, description will be made of a procedure that the user 10 takes out voice messages stored in the MSC 30. On registering the message transfer service, the user 10 receives the URL of the MSC 30.

At first, the user 10 accesses the MSC 30 by the use of the URL through the INTERNET 40 by operating the Web terminal 50 (Step 21).

The Web server 32 of the MSC 30 receives the access from the user 10 and then sends the web page of the MSC 30 as a home page to the Web terminal 50. In the home page, a request image is displayed on the Web terminal 50 so as to input a user ID and a password as an authentication code to the user who requests the automatic message transfer (Step 22). The user 10 inputs the user ID and a password given from the telephone company 20 (Step 23).

The MSC 30 sends the authentication code received from the Web terminal 50 to the telephone company 20 so as to identify the user 10 (Step 24). The MSC 30 approves the user 10 by reception of customer data according with the user ID and the password from the customer database 21 (Step 25). The MSC 30 sends out only predetermined data of a message storage data from the memory device 31 to the Web terminal 50 by means of the authentication and the message storage data sent out are displayed on the screen 51 of the Web terminal 50 by letters (Step 26).

Such data as calling party data, a reception time, and linked URL of each message are displayed in order of arrival on the screen 51. Accordingly, the user 10 selects one of the linked URLs on the Web terminal 50 and accesses to the Web page corresponding to the linked URL selected (Step 27).

The MSC 30 requests the message of the accessed Web page to the memory device 31 (Step 28), and takes out and transfers a storage message corresponding thereto to the Web terminal 50 (Step 29). In case that the stored message is the voice data format as described above, the Web terminal 50 outputs the transferred message by voice from a speaker for example (Step 30).

As the voice data format, a well known format, such as an MPEG1 audio (MP3), a WAVE audio (WAV), or the like may be mentioned. In case that the telephone system adopts a stream type audio system including typically VolP (Voice over IP) and so on, concatenation of voice packets may be used.

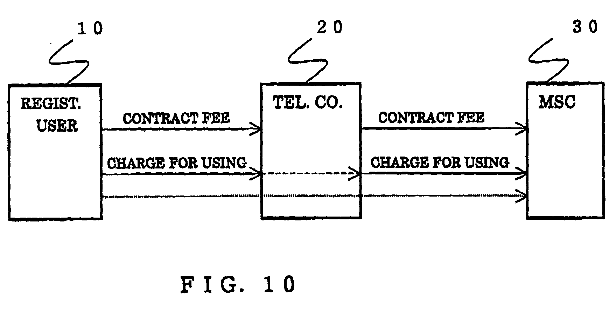

Referring to Fig. 10 and Fig. 3, description will be made of a charge for a contract of the message transfer service.

The user 10 pays a contract fee and a charge for use of telephone and its optional services to the telephone company 20 contracted as a subscriber of the telephone terminal 11. The telephone company 20 pays the contract fee for use and the charge for use of the user 10 to the MSC 30 of another company. Accordingly, the charge for use from the registered user 10 to the telephone company 20 includes the charge for use of the MSC 30 used by the user 10.

In case that the user 10 uses the MSC 30, the user 10 accesses directly from the Web terminal 50 to the MSC 30 through INTERNET 40 without intervention of the telephone company 20. Accordingly, this payment of the charge for use is directly demanded from the MSC 30 to the user 10 and such payment that directly pays from the user 10 to the MSC 30 excepting the telephone company 20 may be accepted.

As described above, the storage data of the message received from the MSC by the Web terminal are listed up and displayed only about minimum requirements for the service, such as the calling party data and the reception time regarding each of stored messages. And the listed storage data are displayed on the screen of the Web terminal by letters. Thus, a large number of the listed data related to many messages can be displayed on the screen by letters and can be selected by the user in consideration of priority of the listed data.

The storage data related to each stored message have a URL linked thereto. Accordingly, by only making access to the Web terminal in the step of sending selected storage data, the user can easily take out the selected message by simple handling, making use of the existing system.

In the above description, the system transfers the voice message by the voice data format, for example MPEG1 audio format as it is, from the MSC to the Web terminal. However, a Web terminal also can display the voice message by letters as described below.

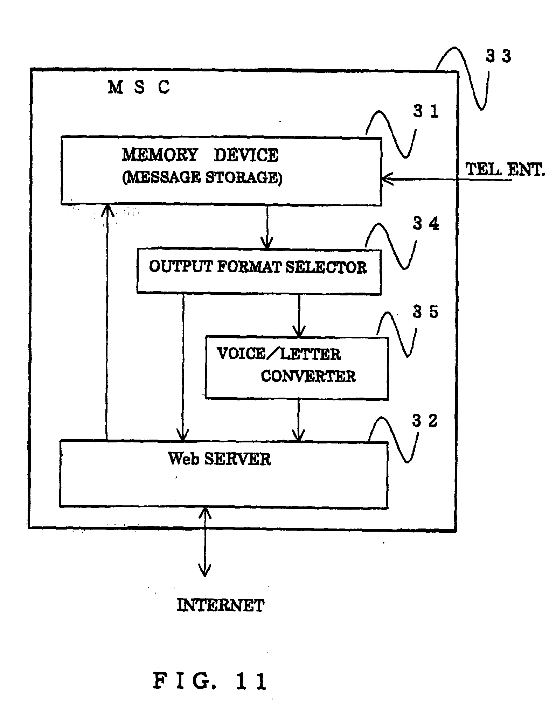

Referring to Fig. 11 and Fig. 3, description will be made of display by letters for voice message according to the embodiment of the present invention.

In Fig. 11, the illustrated MSC 33, comprising a memory device 31 and a Web server 32, further comprises an output format selector 34 and a voice/letter converter 35.

The output format selector 34 selects a transfer data class of the voice messages on the basis of a designation of an output format received from the Web terminal 50 or an output designation at the registration of the message transfer service. For example, the output designation is according to an output format in a message transfer service classification described later.

The voice/letter converter 35 converts a stored message of a voice data format to a text format by a voice recognition feature and sends out the converted message to the Web server 32. Accordingly, the Web terminal 50 receives the text formatted message from the Web server 32 through the INTERNET 40, records and stores the received message, and displays the stored message by letters in the screen 51.

As a result, the MSC 33 can immediately convert the voice data to a text format by the voice/latter converter 35, at a time of transmitting it to the Web terminal 50. Subsequently, the user receives the message converted to letters in a manner similar to an E-mail, and immediately recognizes the contents of the received message on the Web terminal.

In case of converting immediately the message at recording into the memory device and storing there, it is possible to add a first several letter portion of the stored message as a message subject. As a result, the priority selection of the message is easier.

Referring to Fig. 3 and Figs. 12 and 13, description will be made of an E-mail service of a stored message of the MSC. The message is converted to letters for transferring E-mail.

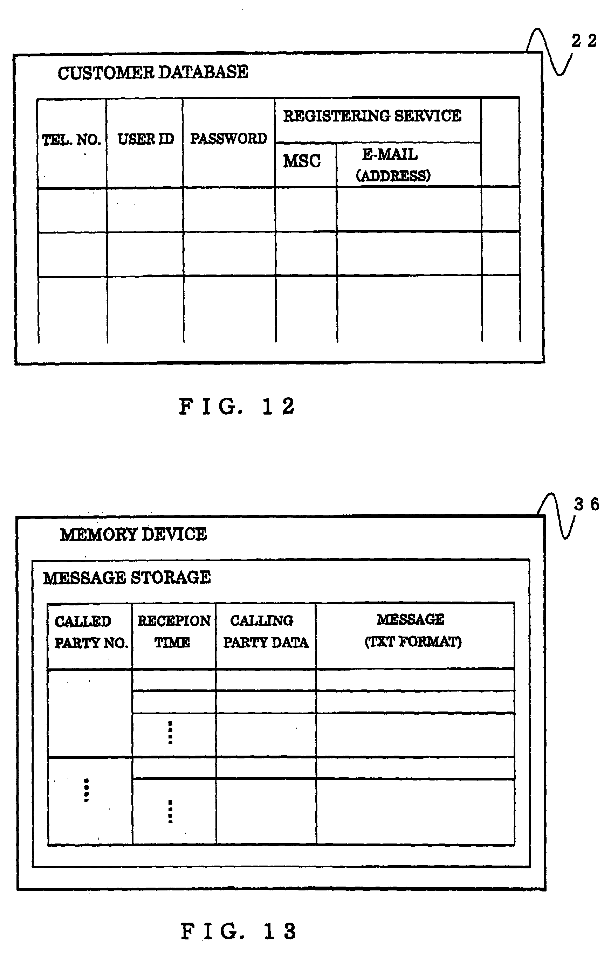

Subsequently, in a customer database 22, a mail address column is added to the registering service area as illustrated in Fig. 12. And, in a memory device 36 in Fig. 13, the URL linked to a message is deleted and the message is formed as an attached file of E-mail.

Referring to Figs. 11 to 14 and Fig. 3, description will be made of a main sequence of an E-mail service according to the embodiment of the present invention.

The user 10 is given previously an E-mail address assigned thereto. The user 10 executes registration of E-mail transfer service by making use of the E-mail address. Such registration may be executed by the use of the telephone terminal 11 or other well-known procedure at a time or after a time of the registration of message transfer service (Step 31). At nay rate, contents of the registration are recorded in a customer database.

Then, at a recording request of an absence message from the telephone company 20, the MSC 33 shown in Fig. 11 records and stores the receiving message to the memory device 36 (Step 32). At the end of message recording, the MSC 33 inquires a customer data relating to a called party number to the database 22 shown in Fig. 12 (Step 33) and receives an E-mail address (Step 34). The MSC 33 sends the message and its storage data to an E-mail address of a destination of the E-mail (Step 35). This message is stored in a POP server corresponding to the E-mail address together with its storage data.

Generally, the user 10 receives reception messages from the POP server, following a reception E-mail. In case that the user contracts an immediate notice of the reception E-mail, the user 10 can promptly receive a notice of E-mail storage or a message storage after recording of the messages.

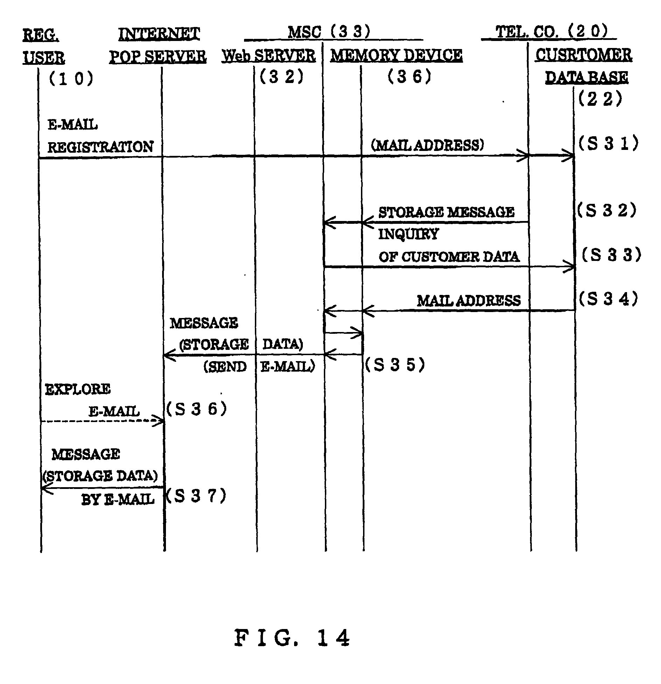

Referring to Fig. 14, description will be made of the E-mail for only message storage data instead of the message according to the embodiment of the present invention. In this case, the memory device 31 illustrated in Fig. 5 may be used for this purpose. The message is recorded in the Web page having a linked URL described above.

The MSC 33 receives a mail address from the telephone company 20 according to Step 34 of Fig. 14 and then sends out an E-mail of message storage data only for the mail address received according to the above-mentioned Step 35. Then, the storage data having a URL linked to the message are stored in the POP server related to this mail address. After reception of this E-mail, the user 10 can take out the message linked by the URL.

In this case, the voice message may not be converted into the letters and the user can take out a voice data format as it is. And the E-mail has a calling party data as a sender and a linked URL or a predetermined first length of the stored voice message converted into the letters by a voice/letter converter as a subject.

Further, in case that the calling party terminal can send the message by both voice and image, the Web terminal can display the image on the screen as described above. Accordingly, by preparing a service code for the MSC registration service at registration of the message transfer service, it is possible to select a transfer service class in the reception side.

For example, as illustrated in Fig. 15, a MSC service code X is written in to a MSC column of registering service area in the customer database 21.

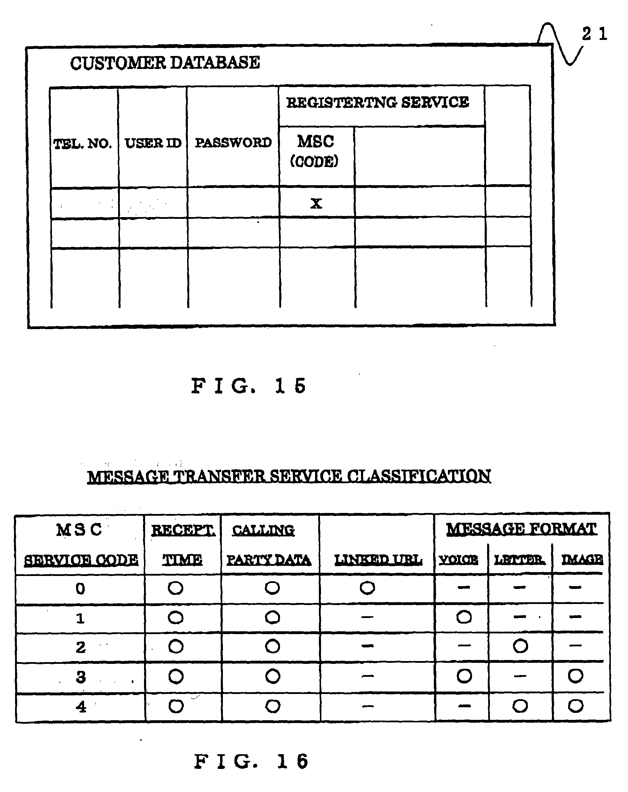

And, as illustrated in Fig. 16, the data first received from the Web terminal by the registered user are a reception time, a calling party data, and a linked URL of a message, as depicted by an MSC service code "0" in Fig. 16. And further a message of text format includes a voice data format or a letter data format received data, as specified by an MSC service code "1" or "2" in Fig. 16. Furthermore, it is possible to also receive image data additionally put in the message area, as depicted by any other MSC service codes "3" or "4" in Fig. 16.

In order to transfer such an image together with voice, it is preferable to use such well-known system as MPEG1, MPEG2, AVI (Audio/Video Interleaved), or the like.

While the present invention has been described in detail in conjunction with the several preferred embodiments thereof, the present Invention is not limited to the foregoing description but can be modified in various manners without departing from the scope of the invention set forth In appended claims.

As apparent from the foregoing description, according to the present invention, the MSC sends out the storage data only to the Web terminal for taking out the message when the user uses the Web terminal and accesses to the MSC through the INTERNET. Accordingly, the user can confirm at least only calling party data and reception time for storage data of many messages and additionally at most one of a subject of a few words by screen, and then the user can select one thereof. With this structure, it is possible to take easily out the message stored in the MSC by the priority of the user.

And, the user can obtain the storage data of the message before taking out of the message itself. The user further can judge erasable messages by obtaining the storage data described above.

Furthermore, the user can use a personal computer as the Web terminal. Accordingly, the user can easily store the required messages of not only voice but also image. As a result, the user can easily administrate the message itself.

## Claims

1. A method for use in a message transfer service of transferring at least one message stored in a message service center MSC (30) to which the message is sent through a telephone company (20) to a terminal of a user (10) registering for the message transfer service and contracting with said telephone company, **characterized in that** a Web terminal (50) for the message transfer service is connected to INTERNET (40) and is used by the user;
the method being **characterized by** comprising:
the first step of making access to the MSC previously notified, from the MSC through the INTERNET to obtain authentication of the message transfer service;
the second step of sending only a part of storage data related to the stored messages destined to the user authenticated;
the third step of displaying the received part of the storage data on the Web terminal in the form of letter information to select the received part of the storage data and to notify the MSC of the selected data; and
the fourth step of receiving the selected data by the MSC to send the message corresponding to the received part from the MSC to the Web terminal.

2. A method for use in a message transfer service of transferring at least one message stored in a message service center MSC (30) by which the message is received through a telephone company (20) and is sent to a terminal of a user (10) registering for the message transfer service and contracting with said telephone company, **characterized in that** a Web terminal (50) for the message transfer service is connected to INTERNET (40); the method being **characterized by** comprising:
the first step of making access to a Web page of the MSC from the Web terminal by the use of a URL (Uniform Resource Locator) assigned to the Web terminal and to authenticate the terminal for the message transfer service;
the second step of sending only a part of storage data related to the messages stored in the MSC when the terminal is authenticated;
the third step of displaying the part of the storage data on the Web terminal to select an item from the part of the storage data and to send the item to the MSC and;
the fourth step of sending the message corresponding to the item from the MSC to the Web terminal.

3. A method for use in a message transfer service of transferring at least one message stored in a message service center MSC (30) by which the message is received through a telephone company (20) and is sent to a terminal of a user (10) registering for the message transfer service and contracting with said telephone company, **characterized in that** a Web terminal (50) for the message transfer service is connected to INTERNET (40) and storage data related to the messages have URLs linked to the stored messages respectively in advance,
the method being **characterized by** comprising:
the first step of making access to a Web page of the MSC from the Web terminal by the use of the URL (Uniform Resource Locator) assigned to the MSC and to get authentication of the message transfer service from the MSC;
the second step of sending, from the MSC, only storage data with the linked URLs regarding messages stored for the registered user corresponding to said Web terminal;
the third step of displaying the storage data of the messages received from the MSC on the Web terminal to select the storage data regarding one of the messages from displayed data and to send the linked URL of the selected data to said MSC; and
the fourth step of sending, from the MSC, the message corresponding to the received linked URL to said Web terminal.

4. A method as claimed in claim 2, **characterized in that** said MSC further comprises a voice/letter converter (35),
the method further comprising the step of converting the stored voice message into a letter message by the voice/letter converter in said MSC to send the letter message to the Web terminal through said INTERNET.

5. A method for use in a message transfer service of transferring at least one message stored in a message service center MSC (30) by which the message is received through a telephone company (20) and which is sent to a terminal of a user (10) registering for the message transfer service and contracting with said telephone company, **characterized in that** a Web terminal (50) is connected to INTERNET (40), and the storage data further includes a transfer service class which is specified by a selected one of a combination of voice data and letter data, either one of voice data or letter data, and a combination of image data with either one of voice data and letter data;
the method being **characterized by** comprising:
the first step of receiving, by the MSC, a registration of the transfer service class of the message by the registered user on registering the message transfer service;
the second step of making access to a Web page of the MSC by the use of URL (Uniform Resource Locator) assigned to the MSC to then Input an approval code previously given and to obtain authentication for use of the message transfer service;
the third step of sending, from the MSC, only part storage data regarding messages stored for the registered user corresponding to said Web terminal;
the fourth step of displaying, on the MSC, the storage data received from the MSC to select the storage data regarding one of the messages from displayed data and to send the selected data to said MSC; and
the fifth step of sending, from the MSC to said Web terminal, the message corresponding to the received storage data.

6. A method for use in a message transfer service of transferring at least one message stored in a message service center MSC (30) by which the message is received through a telephone company (20) and which is sent out to a terminal of a user (10) registering for the message transfer service and contracting with said telephone company, **characterized in that** a Web terminal (50) is connected to INTERNET (40),
the method being **characterized by** comprising the steps of:
receiving, by said telephone company, a registration of a E-mail address as one of customer data for the registered user in advance; and
sending, from said MSC through said INTERNET, only message storage data including calling party data and a reception time of the message destined to the user specified by the E-mail address, when the MSC obtains the E-mail address at a time of storing message received in the absence of the user,

7. A method for use in a message transfer service of transferring at least one message stored in a message service center MSC (30) by which the message is received through a telephone company (20) and which is sent out to a terminal of a user (10) registering for the message transfer service and contracting with said telephone company, **characterized in that** a Web terminal (50) is connected to INTERNET (40), and storage data further include a transfer service class which is specified by a selected one of a combination of voice data and letter data, either one of voice data and letter data, and a combination of image data together with either one of voice data and letter data,
the method being **characterized by** comprising the steps of:
receiving, by the MSC, registration of the transfer service class of the message sent from the registered user on registering the message transfer service;
receiving, by the telephone company, registration of a E-mail address as one of customer data for the registered user in advance; and
sending, from the MSC to the user specified by the E-mail address through the INTERNET, only message storage data including calling party data and a reception time of the message and data on the basis of the registered transfer service class when the MSC requesting to said telephone company obtains the E-mail address at a time of storing message received in the absence of the user,

8. A method for use in a message transfer service of transferring at least one message stored in a message service center MSC (30) by which the message is received through a telephone company (20) and which is sent to a terminal of a user (10) registering for the message transfer service and contracting with said telephone company, **characterized in that** a Web terminal (50) is connected to INTERNET (40), and storage data further include a transfer service class which is specified by a selected one of a combination of voice data and letter data , either one of the voice and the letter data, and a combination of image data together with either one of voice data and letter data, the storage data related to the messages having URLs linked the stored messages respectively in advance,
the method being **characterized by** comprising:
first step of registering, by the MSC, the transfer service class of the message sent by the registered user on registering the message transfer service;
second step of registering, by the telephone company, an E-mail address as one of customer data for the registered user in advance;
third step of obtaining, by the MSC requesting to said telephone company, the E-mail address at a time of storing message received in the absence of the user;
fourth step of sending, from the MSC to the user through the INTERNET, only message storage data including calling party data, a reception time of the message and data that are based on the registered transfer service class and are added to the storage data and have the linked URL;
fifth step of displaying, on the Web terminal to said MSC through the INTERNET, the storage data of the messages received from said MSC on screen to select the storage data regarding one of the messages from displayed data sends the linked URL of the selected data; and
sixth step of sending, from the MSC to said Web terminal through said INTERNET, the message corresponding to the received linked URL.
